# EUROPÄISCHE PATENTANMELDUNG

(11) **EP 1 104 076 A1**
(43) Veröffentlichungstag der Anmeldung: **30.05.2001**
(21) Anmeldenummer: 00124416.9
(22) Anmeldetag: 08.11.2000
(51) Int. Cl.: H02K 1/24, H02K 15/02

(54) **Elektrische Klauenpolmaschine**

(30) Priorität: 27.11.1999 DE 19957143
(71) Anmelder: ROBERT BOSCH GMBH, 70442 Stuttgart (DE)
(72) Erfinder: Knappenberger, Uwe, 75417 Muehlacker (DE)

(57) **Zusammenfassung**

Die Erfindung betrifft eine elektrische Klauenpolmaschine, insbesondere Generator, mit einem Rotor, der zumindest eine erste und zweite Klauenpolkrone umfasst, von denen jede zumindest zwei Klauen aufweist, und mit einem Verbindungselement für die beiden Klauenpolkronen, die sich dadurch auszeichnet, dass das Verbindungselement (10) zumindest zwei Verbindungsteile (11) aufweist, von denen jedes eine Spitze (6') einer Klaue (6) der einen Klauenpolkrone (2) mit einer Klauenwurzel (7') zumindest einer Klaue (7) und/oder einer Platine (5) der anderen Klauenpolkrone (3) verbindet.

## Beschreibung

Die Erfindung betrifft eine elektrische Klauenpolmaschine mit den im Oberbegriff des Anspruchs 1 genannten Merkmalen.

### Stand der Technik

Klauenpolmaschinen der eingangs genannten Art sind bekannt. Der auch als Leitstückläufer bezeichnete Rotor der Klauenpolmaschine weist zumindest zwei Klauenpolkronen auf, bei denen die Klauenkontur sinusförmig ausgebildet sein kann. Die beiden Klauenpolkronen sind aneinander so befestigt, dass eine Klaue einer Krone in den Zwischenraum von zwei benachbarten Klauen der anderen Krone zu liegen kommt. Beide Klauenpolkronen sind mittels eines Verbindungselements aneinander befestigt, das als unmagnetischer Haltering ausgebildet sein kann.

Der Arbeitsluftspalt zwischen einem Ständerwicklungsträger der Klauenpolmaschine und dem Rotor muss derart bemessen sein, dass Herstellungstoleranzen, Aufweitung des Rotors unter Drehzahl und thermische Aufweitung des Rotors nicht zu einer Berührung zwischen Rotor und Ständerwicklungsträger führt.

### Vorteile der Erfindung

Die elektrische Klauenpolmaschine mit den im Anspruch 1 genannten Merkmalen weist demgegenüber den Vorteil auf, dass die thermische Aufweitung des Rotors zumindest reduziert ist. Somit sind kleinere Arbeitsluftspalte realisierbar, wodurch eine höhere elektrische Leistung der Klauenpolmaschine erreichbar ist. Bei gleichbleibender Weite des Arbeitsluftspaltes könnte allerdings auch auf das sogenannte Vorschleudern des Rotors verzichtet werden, wodurch sich die Herstellungskosten für die elektrische Klauenpolmaschine reduzieren lassen. Wird das Verbindungsteil des Verbindungselements mit der Spitze einer Klaue der einen Klauenpolkrone und einer Platine der anderen Klauenpolkrone verbunden, erfolgt in vorteilhafter Weise ein Wärmefluss von der Klaue über das Verbindungsteil zu der kälteren Platine, so dass die thermische Aufweitung insbesondere im Bereich der Klauenspitze zumindest reduziert ist. Dadurch, dass kein durchgehendes beziehungsweise umlaufendes Verbindungsteil wie im Stand der Technik verwendet wird, kann eine Erwärmung des erfindungsgemäßen Verbindungsteils nicht zu einer thermischen Aufweitung des Rotors führen. Zumindest ist die thermische Aufweitung jedoch reduziert.

Bevorzugt wird bei einem Ausführungsbeispiel das Verbindungsteil an der Klauenspitze der einen Krone und an zwei Klauenwurzeln der anderen Krone befestigt. Zudem kann vorgesehen sein, dass das Verbindungsteil mit der Platine der anderen Klauenpolkrone verbunden ist.

Da die Klauen der einen Klauenpolkrone eine andere Polarität aufweisen können wie die Klauen der anderen Klauenpolkrone, weisen die Verbindungsteile nichtmagnetisches Material auf. Sie können jedoch auch vollständig aus dem nichtmagnetischen Material hergestellt sein.

In bevorzugter Ausführungsform ist vorgesehen, dass die Klauenpolkronen jeweils eine Platine aufweisen, von der die Klauen ausgehen, so dass in vorteilhafter Weise jede Klauenpolkrone einstückig ausgebildet ist. Bevorzugt werden die Klauenpolkronen als Schmiedeteile realisiert.

Um einen sehr guten Wärmefluss zwischen der Klauenspitze und der Klauenwurzel und/oder der Platine zu erreichen, werden die Verbindungsteile vorzugsweise mittels Schweißen an der Klauenspitze beziehungsweise der Klauenwurzel und/oder der Platine befestigt.

Um die Montage des Rotors zu vereinfachen, ist vorzugsweise vorgesehen, dass zwei benachbarte Verbindungsteile mit einem Zwischenstück aneinander befestigt sind, so dass insgesamt ein geschlossenes Verbindungselement vorliegt, wobei die Zwischenstücke im Vergleich zu den Verbindungsteilen einen wesentlich geringeren Querschnitt aufweisen, da sie nicht der Verbindung der Klauenpolkronen dienen, sondern lediglich ein Zusammenhalt der Verbindungsteile während der Montage des Rotors ermöglichen sollen. Bei der Montage des Rotors werden die Rotorteile auf einer Haltevorrichtung angeordnet, die den toleranzgerechten Zusammenbau des Rotors gewährleistet. Insbesondere dadurch, dass die Verbindungsteile mit den Klauen und/oder der Platine durch Schweißen verbunden sind, werden somit in vorteilhafter Weise auch Abstandstoleranzen ausgeglichen.

Vorteilhafte Ausgestaltungen ergeben sich aus den Unteransprüchen.

### Zeichnung

Im Folgenden wird die Erfindung anhand von Ausführungsbeispielen mit Bezug auf die Zeichnung näher erläutert. Es zeigen:
- Figur 1: eine teilgeschnittene Seitenansicht eines Rotors einer Klauenpolmaschine und
- Figur 2: ein Verbindungselement.

### Beschreibung der Ausführungsbeispiele

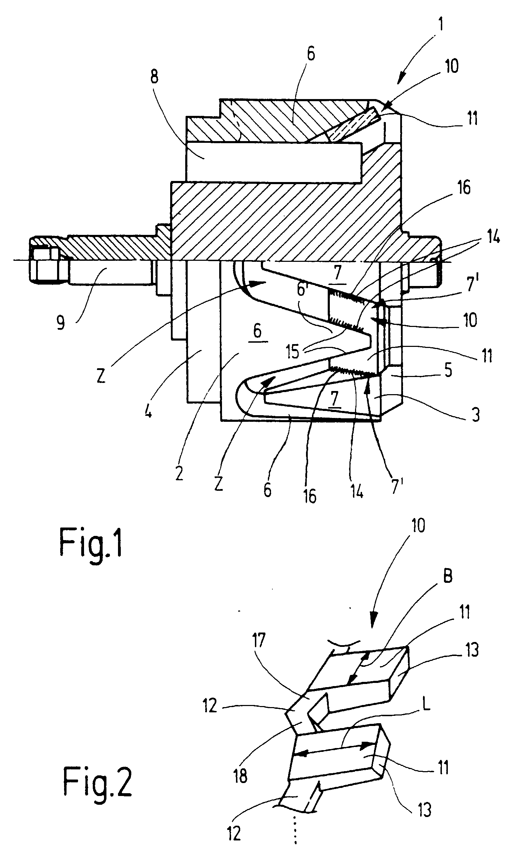

Figur 1 zeigt den Rotor 1 einer elektrischen Klauenpolmaschine, von der der feststehende Teil, also der Ständer, nicht dargestellt ist. Der Rotor umfasst eine erste und zweite Klauenpolkrone 2 und 3, von denen jede eine an sich bekannte Platine 4 beziehungsweise 5 aufweist. Von der auch als A-Platine bezeichneten Platine 4 gehen Klauen 6 aus, die somit auch als A-Klauen bezeichnet werden. Von der auch als B-Platine bezeichneten Platine 5 gehen Klauen 7 aus, die somit auch als B-Klauen bezeichnet werden. Die beiden Klauenpolkronen 2 und 3 sind einander so zugeordnet und miteinander verbunden, dass jeweils eine Klaue 6 oder 7 in einem zwischen zwei Klauen 6 oder 7 vorliegenden Zwischenraum Z zu liegen kommt.

Es zeigt sich also, dass sowohl die erste und zweite Klauenpolkrone 2 und 3 quasi eine Topfform aufweisen, wobei von der Umfangswandung des Topfes die Klauen 6 beziehungsweise 7 herausgearbeitet sind und die Platinen 4 beziehungsweise 5 jeweils den Topfboden bilden. Insbesondere in der A-Platine 4 ist eine umlaufende Ausnehmung 8 eingebracht, durch die bei komplett zusammengesetzter Klauenpolmaschine eine feststehende Erregerwicklung (nicht dargestellt) hindurchtritt, die mithin in dem von den Klauenpolkronen 2 und 3 umschlossenen Raum liegt. Für die Drehlagerung des Rotors 1 weist dieser eine Achse 9 auf, die die Klauenpolkronen 2 und 3 trägt.

Aus Figur 1 geht hervor, dass die beiden Klauenpolkronen 2 und 3 mittels eines Verbindungselements 10 miteinander verbunden beziehungsweise aneinander befestigt sind. Das Verbindungselement 10 weist entsprechend der Anzahl der Klauen 6 beziehungsweise 7 mehrere Verbindungsteile 11 auf, die -gemäß Figur 2- über Zwischenstücke 12 miteinander verbunden sein können. Figur 2 zeigt, dass die Verbindungsteile 11 eine Breite B derart aufweisen, dass sie den zwischen zwei Klauen 7 gebildeten Zwischenraum Z überspannen. In ihrer Länge L sind sie so ausgebildet, dass sie zumindest die Klauenspitze 6' der Klaue 6 überdecken und außerdem gewährleisten, dass das Verbindungsteil 11 mit seiner Stirnseite 13 an der B-Platine 5 befestigt werden kann. Um die beiden Klauenpolkronen 2 und 3 fest miteinander verbinden zu können, sind Schweißnähte 14 vorgesehen, wobei jeweils eine Schweißnaht 14 an den Flanken 15 der Klaue 6 und an den Flanken 16 der Klauen 7 vorgesehen ist. Außerdem kann zwischen der Stirnseite 13 und der B-Platine 5 eine weitere Schweißnaht 14 vorliegen. Die Länge L der Verbindungsteile 11 ist so bemessen, dass die Klaue 6 an ihrer Klauenspitze 6' und die Klaue 7 an ihrer Klauenwurzel 7' untergriffen sind. Die Länge L der plattenförmigen Verbindungsteile 11 ist also vorzugsweise wesentlich kürzer als die axiale Länge der Klauen 6 beziehungsweise 7 gewählt.

Um einen magnetischen Kurzschluss zwischen einer Klaue 6 und zwei Klauen 7 zu vermeiden, umfassen die Verbindungsteile 10 nichtmagnetisches Material beziehungsweise sind vollständig aus diesem Material gefertigt.

Um eine leichte Montage des Rotors 1 zu ermöglichen, sind mehrere Verbindungsteile 11 über die vorstehend erwähnten Zwischenstücke 12 miteinander verbunden. Der Querschnitt der Zwischenstücke 12 ist jedoch wesentlich geringer als der Querschnitt der einzelnen Verbindungsteile 11. In Figur 2 ist dargestellt, dass ein Zwischenstück 12 zwei, vorzugsweise gleichlange, Schenkel 17 und 18 aufweist, die einen Winkel zueinander einschließen. Wichtig ist, dass bei dem geschlossenen Verbindungselement 10, das also die Zwischenstücke 12 aufweist, keine steife Struktur gebildet wird, die bei einer Erwärmung des Rotors 1 die Klauenspitzen 6' radial nach außen drängen könnte, da das Verbindungsteil 11 unter der Klauenspitze 6' liegt. Um das Nachaußendrängen zu verhindern, sind die Zwischenstücke 12-wie vorstehend erwähnt- im Querschnitt wesentlich geringer ausgebildet als die Verbindungsteile 11. Da die Klauenspitzen 6' mit den Verbindungsteilen 11 verschweißt sind, die wiederum an den Flanken 16 der Klauen 7 angeschweißt sind, tritt auch bei sehr hohen Drehzahlen des Rotors eine Aufweitung des Rotors nicht auf. Dadurch, dass die Verbindungsteile 11 mit ihren Stirnseiten 13 mit der B-Platine 5 verschweißt sein können, ist außerdem ein sehr guter Wärmefluss von den Klauen 6 beziehungsweise 7 zu der betriebsbedingt kälteren B-Platine 5 gegeben, so dass auch dadurch die thermische Aufweitung sehr stark reduziert ist.

Insgesamt zeigt sich also, dass die radiale Aufweitung des Rotors 1 im Wesentlichen durch das erfindungsgemäße Verbindungselement mit seinen Verbindungsteilen 11 vermieden ist. Der Arbeitsluftspalt kann somit enger gewählt werden. Der Rotor 1 lässt sich außerdem auf höhere Drehzahlen bringen. Ferner werden die Fertigungskosten verringert, da auf das Vorschleudern, bei dem eine plastische Verformung des Rotors erfolgt, verzichtet werden kann.

## Patentansprüche

1. Klauenpolmaschine, insbesondere Generator, mit einem Rotor, der zumindest eine erste und zweite Klauenpolkrone umfasst, von denen jede zumindest zwei Klauen aufweist, und mit einem Verbindungselement für die beiden Klauenpolkronen, **dadurch gekennzeichnet,** dass das Verbindungselement (10) zumindest zwei Verbindungsteile (11) aufweist, von denen jedes eine Spitze (6') einer Klaue (6) der einen Klauenpolkrone (2) mit einer Klauenwurzel (7') zumindest einer Klaue (7) und/oder einer Platine (5) der anderen Klauenpolkrone (3) verbindet.

2. Klauenpolmaschine nach Anspruch 1, **dadurch gekennzeichnet,** dass jeweils ein Verbindungsteil (11) an der Klauenspitze (6') und an zwei Klauenwurzeln (7') befestigt ist.

3. Klauenpolmaschine nach einem der vorherigen Ansprüche, **dadurch gekennzeichnet,** dass die Verbindungsteile (11) nichtmagnetisches Material aufweisen.

4. Klauenpolmaschine nach einem der vorherigen Ansprüche, **dadurch gekennzeichnet,** dass jede Klauenpolkrone (2,3) eine Platine (4,5) aufweist, von der die Klauen (6,7) ausgehen.

5. Klauenpolmaschine nach einem der vorherigen Ansprüche, **dadurch gekennzeichnet,** dass die Befestigung der Verbindungsteile (11) an den Klauen (6,7) und/oder an der Platine (5) mittels Schweißen erfolgt.

6. Klauenpolmaschine nach einem der vorherigen Ansprüche, **dadurch gekennzeichnet,** dass die Klauenpolkronen (2,3) Schmiedeteile sind.

7. Klauenpolmaschine nach einem der vorherigen Ansprüche, **dadurch gekennzeichnet,** dass die Verbindungsteile (11) mit Zwischenstücken (12) aneinander befestigt sind.

8. Klauenpolmaschine nach einem der vorherigen Ansprüche, **dadurch gekennzeichnet,** dass das Verbindungsteil (11) unter der Klauenspitze (6') liegt.
